Europäisches Patentamt

European Patent Office

Office européen des brevets

(11) Numéro de publication: **0 350 352**
**A1**

## (12) DEMANDE DE BREVET EUROPEEN

(21) Numéro de dépôt: 89401689.8

(22) Date de dépôt: 15.06.89

(51) Int. Cl.5: **A 23 G 9/28**
**A 21 C 15/00, A 23 G 1/00,**
**A 23 G 3/20, A 23 G 3/22**

(30) Priorité: 05.07.88 FR 8809611

(43) Date de publication de la demande:
10.01.90 Bulletin 90/02

(84) Etats contractants désignés:
BE CH DE ES FR GB IT LI LU NL

(71) Demandeur: ESAL S.A.
Lieu-dit "Les Fabriques"
F-26260 Clerieux (FR)

(72) Inventeur: Gautier, Jean-Paul
Lieu-dit "Grioges" Chavannes
F-26260 Saint-Donat-sur-l'Herbasse (FR)

(74) Mandataire: Bonnetat, Christian
Cabinet PROPI Conseils 23 rue de Léningrad
F-75008 Paris (FR)

Le titre de l'invention a été modifié (Directives relatives à l'examen pratiqué à l'OEB, A-III, 7.3)

(54) **Procédé de revêtement par une pâte de confiserie telle que du chocolat de l'intérieur de récipients consommables et dispositif à cet effet.**

(57) - Procédé et dispositif industriels de chemisage par une pâte de confiserie, telle que du chocolat, de l'intérieur de contenants (3) consommables en forme de coupes, cornets ou similaires, selon lequel on amène chaque contenant consommable (3) dans une position telle que les faces intérieures de ses parois et son fond sont en regard des moyens de projection (4) de la pâte de confiserie, et on maintient le contenant (3) dans cette position pendant une durée (d) au cours de laquelle les moyens de projection (4) envoient à l'intérieur du contenant consommable (3) la pâte de confiserie préalablement portée en fusion.
- Selon l'invention, on fait tourner lesdits moyens de projection pendant ladite durée de projection (d).

FIG.1

EP 0 350 352 A1

Description

**Procédé industriel de chemisage par une pâte de confiserie telle que du chocolat, de l'intérieur de contenants consommables en forme de coupes, cornets ou similaires et dispositifs pour sa mise en oeuvre.**

La présente invention a pour objet un procédé et un dispositif industriels pour le chemisage par une pâte de confiserie, telle que du chocolat, de l'intérieur de contenants consommables, tels que coupes, cornets ou similaires.

Par le brevet BE-A-707 770, on connaît déjà un dispositif pulvérisateur pour enduire l'intérieur de cornets d'une dispersion de graisse liquide et comestible. Un tel dispositif ne saurait être utilisé pour la pulvérisation d'une pâte de confiserie, qui, au lieu d'être liquide, est au contraire visqueuse, ce qui complique la pulvérisation elle-même et rend difficile l'obtention d'un revêtement uniforme, régulier et sans lacunes.

Dans le brevet EP-A-0 045 522, on décrit la pulvérisation d'un revêtement visqueux (au moins 50% de sucre) à l'intérieur de contenants consommables. Pour cela, ce brevet mentionne la possibilité de la mise en rotation des contenants consommables, ce qui apporterait beaucoup de complications techniques au dispositif. D'ailleurs, dans ce brevet, on prévoit trois autres méthodes d'application du revêtement visqueux et on précise que, la pulvérisation d'un tel liquide soulevant des difficultés, il est préférable de mettre en oeuvre une des trois autres méthodes.

On voit donc que, bien que le revêtement du brevet EP-A-0 045 522 soit moins visqueux qu'une pâte de confiserie, telle que du chocolat ou de la confiture, il n'est pas possible pratiquement de l'appliquer par pulvérisation, surtout à cadence industrielle.

Ainsi, il n'existe actuellement aucun procédé, ni dispositif permettant de chemiser à cadence industrielle l'intérieur de contenants consommables avec une telle pâte de confiserie. Seule est utilisée la méthode artisanale connue et employée notamment par le pâtissier consistant à mettre en fusion, par exemple, du chocolat et à appliquer une quantité non dosée de ce chocolat en fusion, au moyen d'un pinceau ou d'un pistolet sur l'intérieur de chaque biscuit ou gâteau.

Outre le temps important nécessaire pour ces opérations manuelles, qui est incompatible avec des impératifs industriels de rentabilité, il est relativement délicat de chemiser manuellement l'intérieur de contenants, particulièrement lorsque ceux-ci ont une forme allongée et pointue de cornets coniques, du type cornets à glace. Ainsi, l'un des buts essentiels de la présente invention est de remédier à ces difficultés en procurant un procédé industriel de chemisage par une pâte de confiserie telle que le chocolat, de l'intérieur de contenants aux consommables en forme de coupes, cornets ou similaires, ainsi que des dispositifs pour la mise en oeuvre de ce procédé. Ce dernier permet de chemiser ou napper, à des cadences industrielles très élevées, l'intérieur de contenants avec une quantité dosée et économique de chocolat, l'éventuel surplus étant récupéré et réutilisé dans le procédé.

A cette fin, selon l'invention, le procédé industriel de chemisage par une pâte de confiserie, telle que du chocolat, de l'intérieur de contenants consommables en forme de coupes, cornets ou similaires, selon lequel on amène chaque contenant consommable dans une position telle que les faces intérieures de ses parois et son fond sont en regard de moyens de projection de la pâte de confiserie, et on maintient le contenant dans cette position pendant une durée (d) au cours de laquelle les moyens de projection envoient à l'intérieur du contenant consommable la pâte de confiserie préalablement portée en fusion, est caractérisé en ce que l'on fait tourner lesdits moyens de projection pendant ladite durée de projection (d).

Ainsi, on peut obtenir une répartition uniforme, régulière et sans lacune de la matière de chemisage à l'intérieur des contenants, au prix d'une légère complication du système de pulvérisation et d'un léger temps d'arrêt des contenants pendant la pulvérisation.

De préférence, on projette en excédent la pâte de confiserie à l'intérieur desdits contenants consommables et on élimine et on récupère ensuite le surplus de pâte de confiserie non utilisé au chemisage de ceux-ci.

Pour la mise en oeuvre du procédé selon l'invention, on prévoit un dispositif comprenant une enceinte régulée thermiquement à une température au moins égale à la température de fusion de la pâte de confiserie, et présentant une entrée et une sortie, à l'intérieur de laquelle sont disposés une chaîne de transport supportant et convoyant les contenants, des moyens rotatifs pour la projection de la pâte de confiserie en fusion à l'intérieur des contenants, ces moyens rotatifs de projection étant reliés à un circuit d'alimentation sous pression à la pâte de confiserie en fusion et des moyens de positionnement des contenants permettant de placer successivement, pendant la durée de projection d, les faces intérieures des parois et le fond de chacun d'eux en regard des moyens de projection.

Selon une première forme de réalisation, lesdits moyens de projection sont constitués par au moins un pistolet mobile en rotation autour de son axe, sous l'effet d'un organe d'actionnement, le pistolet étant solidaire en rotation, à l'une de ses extrémités, d'un tube d'amenée de pâte de confiserie, lui-même relié, par l'intermédiaire d'un raccord tournant étanche, au circuit d'alimentation sous pression, et, à son autre extrémité, d'un embout tubulaire coudé à l'extrémité libre duquel est montée une buse apte à projeter un jet de pâte de confiserie en fusion à l'intérieur d'un contenant, de telle sorte qu'à chaque pas d'entraînement de la bande transporteuse sans fin chargée de contenants, l'un d'eux se trouve placé pendant une durée d directement en regard de la buse dans l'axe du pistolet et que simultanément, d'une part, une électrovanne disposée sur le circuit d'alimentation s'ouvre autorisant ainsi la venue de la

EP 0 350 352 A1

pâte de confiserie jusqu'à la buse et, d'autre part, l'organe d'actionnement soit mis en marche et provoque la rotation du pistolet autour de son axe, et donc de la buse, qui projette la pâte de confiserie sur la périphérie des parois intérieures du contenant, la fin de la rotation coïncidant avec la fermeture de l'électrovanne.

L'organe d'actionnement peut être constitué par un vérin pneumatique à double effet dont la tige mobile par rapport au corps fixe est reliée par son extrémité à une crémaillère s'engrenant sur un pignon cylindrique, coaxial au pistolet et solidaire du tube d'amenée de pâte de confiserie. L'angle de rotation du pistolet est d'au moins 360°.

Dans une variante de réalisation, lesdits moyens de projection sont constitués par au moins un tube de projection coaxial au vérin de positionnement, mobile en rotation autour de son axe et en translation entre une position rapprochée de projection et une position éloignée sous l'effet de moyens de manoeuvre, l'extrémité libre de ce tube étant équipée d'une buse et son autre extrémité étant reliée à un raccord tournant, lui-même relié, d'une part, à un conduit d'amenée de pâte de confiserie en fusion du circuit d'alimentation sous pression, et d'autre part aux moyens de manoeuvre. Les moyens de manoeuvre peuvent être constitués par un premier vérin à double effet dont la tige mobile par rapport au corps fixe est liée au tube de projection par l'intermédiaire d'un raccord tournant et par un second vérin à double effet comportant un corps fixe et une tige mobile dont l'extrémité extérieure est prolongée par une crémaillère s'engrenant sur un pignon coaxial au tube de projection dont il est solidaire par l'intermédiaire du raccord tournant, ces deux vérins fonctionnant de telle sorte qu'après arrêt d'un contenant par les moyens de positionnement, dans un premier temps, le premier vérin soit mis en action et provoque le déplacement du tube de projection de sa position éloignée jusqu'à sa position rapprochée dans laquelle la buse est disposée à l'intérieur du contenant, et dans un deuxième temps le second vérin entraîne en rotation le tube de projection et la buse et, simultanément une électrovanne, disposée sur le circuit d'alimentation, s'ouvre, permettant ainsi la projection d'un voile de pâte de confiserie en fusion sur les parois intérieures et sur le fond du contenant, la fermeture de l'électrovanne et le retour en position basse du tube de projection intervenant avant le terme de la durée. De préférence, la buse est de forme tronconique et présente des fentes en croix.

Dans le dispositif conforme à l'invention, la chaîne de transport peut être constituée par une bande transporteuse sans fin, convoyant les contenants de l'entrée de l'enceinte vers l'intérieur, munie d'alvéoles prévus pour recevoir les contenants, dans lesquels ils sont disposés de telle manière que les faces intérieures de leurs parois et leurs fonds soient tournés vers le haut, cette bande transporteuse étant animée de façon discontinue par un moteur constituant les moyens de positionnement et on peut prévoir, des moyens d'agitation des contenants comprenant un tapis vibrant ajouré tel qu'un treillage à mailles se déplaçant autour de deux cylindres rotatifs dont l'un est entraîné par un moteur, l'une des extrémités de ce tapis vibrant étant disposée au-dessous et à l'aplomb de l'extrémité intérieur de la bande transporteuse, de telle manière que, lorsque les contenants dans lesquels la pâte de confiserie a été projetée arrivent en bout de bande transporteuse, ils basculent en position renversée sur le tapis vibrant sur lequel ils sont transportés, tout en étant agités, jusqu'à la sortie de l'enceinte, des moyens de récupération du surplus de pâte de confiserie étant constitués par une cuve à parois chauffantes conçue comme une trémie et disposée directement au-dessous du tapis vibrant, le fond de cette cuve étant relié au circuit d'alimentation sous pression par l'intermédiaire d'un conduit de sortie sur lequel est prévu une électrovanne. Il est avantageux de prévoir, sous le brin supérieur du tapis vibrant, un rotor parallélépipédique à cames entraîné en rotation par un moteur autour de son axe et disposé de telle façon qu'il soulève par intermittence le brin supérieur du tapis vibrant, mettant ainsi ce dernier en vibration.

Dans une autre forme de réalisation, la chaîne de transport est constituée par au moins deux fils transporteurs sans fin continus, parallèles entre eux et situés au même niveau, dont chacun est monté, déplaçable autour d'au moins deux poulies disposées respectivement à l'entrée et à la sortie de l'enceinte, l'une au moins de ces deux poulies étant motrice, les contenants étant disposés sur ces deux fils transporteurs de telle manière que les faces intérieures de leurs parois et leurs fonds soient tournées vers le bas, afin de coopérer avec les moyens de projection disposés au-dessous et prévus pour s'engager entre les deux fils transporteurs. On prévoit des moyens de récupération, qui sont constitués par une cuve à parois chauffantes, conçue comme une trémie, présentant une forme en "V" en vue de face, et disposée directement au-dessous des fils transporteurs, le fond de cette cuve communiquant avec un conduit de sortie la reliant au circuit d'alimentation sous pression. Dans une première partie de l'enceinte située directement après l'entrée, il peut être prévu des moyens de positionnement des contenants qui comprennent au moins un vérin à double effet d'axe vertical compris dans le plan médian longitudinal des deux fils transporteurs comportant un corps fixe et une tige mobile entre une position basse et une position haute, à l'extrémité inférieure de laquelle est montée une pièce de retenue apte à arrêter pendant une durée d chaque contenant par rapport aux fils transporteurs mobiles, en position basse de la tige. Des moyens d'agitation, disposés dans la deuxième partie de l'enceinte, sont constitués par exemple, par un rotor parallélépipédique à cames entraîné en rotation par un moteur autour d'un axe horizontal et disposé de telle façon qu'il soulève par intermittence les brins supérieurs des fils transporteurs mettant ainsi ces derniers en vibration, ce qui provoque l'agitation et l'égouttage des contenants chemisés au cours de leur déplacement jsuqu'à la sortie de l'enceinte.

Les figures du dessin annexé feront bien comprendre comment l'invention peut être réalisée. Sur ces figures, des références identiques désignent des éléments semblables.

La figure 1 est une vue schématique d'une première forme de réalisation du dispositif conforme à l'invention.

La figure 2 est une vue schématique d'une deuxième forme de réalisation du dispositif conforme à l'invention.

La figure 3 est une vue schématique, en coupe transversale selon la ligne III-III de la figure 2.

La figure 4 est une vue schématique en perspective d'une buse de projection plus spécialement destinée à la deuxième forme de réalisation du dispositif selon l'invention.

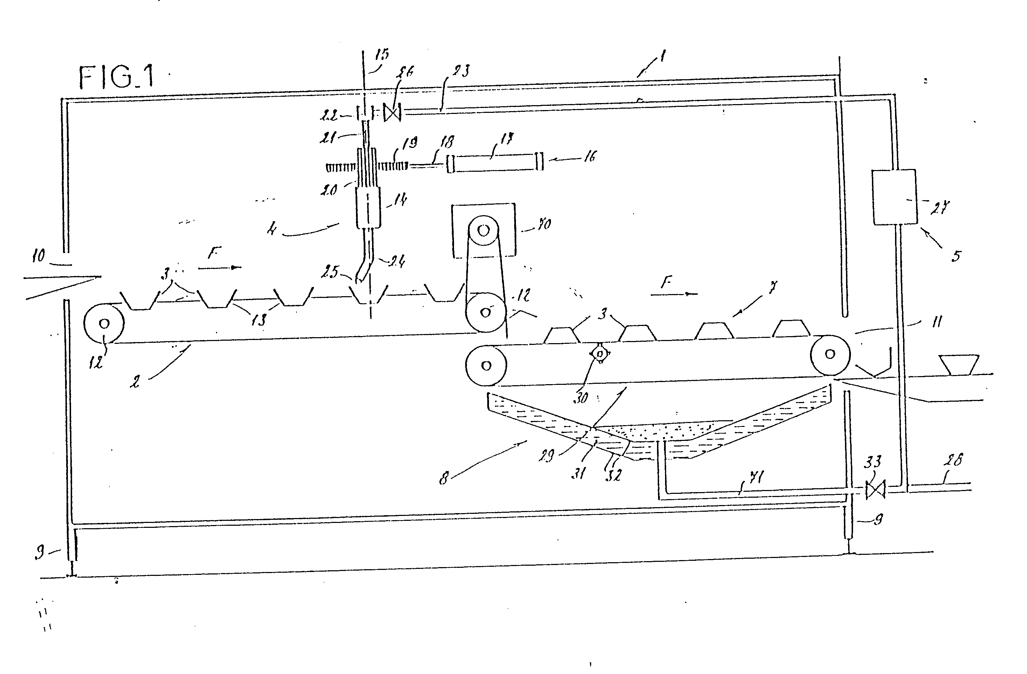

Le dispositif schématisé sur la figure 1 comporte une enceinte 1, une chaîne de transport 2, des contenants 3, des moyens de projection 4 de la pâte de confiserie en fusion reliés à un circuit d'alimentation 5, des moyens de positionnement 6 des contenants 3, et des moyens d'agitation 7 des contenants 3, associés à des moyens de récupération 8.

Dans cet exemple, les contenants 3, dont l'intérieur est destiné à être chemisé par du chocolat, sont des coupelles tronconiques à fond plat réalisées à partir de pâte à biscuit.

L'enceinte 1 est constituée par un caisson de forme essentiellement parallélépipédique reposant sur le sol par l'intermédiaire de pieds 9. Elle comporte un passage d'entrée 10 et un passage de sortie 11 des coupelles 3. La température à l'intérieur de l'enceinte 1 est régulée par ventilation, par tout moyen approprié et connu en soi, à une valeur sensiblement constante au moins égale à la température de fusion de la pâte de confiserie employée, c'est-à-dire, environ 45°C pour le chocolat.

Comme il apparaît sur la figure 1, les coupelles 3 en pâte à biscuit pénètrent à l'intérieur de l'enceinte 1 par le passage d'entrée 10 et une fois chemisées et égouttées sont évacuées par le passage de sortie 11. Elles peuvent ensuite être acheminées vers une aire de refroidissement, telle qu'un tunnel réfrigérant non représenté sur le dessin.

A l'intérieur de l'enceinte 1, les coupelles 3 sont prises en charge par la chaîne de transport 2, constituée par une bande transporteuse sans fin montée déplaçable, de façon discontinue, dans le sens de la flèche F autour de deux rouleaux 12 dont l'un est animé par une courroie d'entraînement non référencée reliée à un moteur 70. La bande transporteuse 2 présente des alvéoles 13 dans lequels tombent et se logent les coupelles 3, de telle façon que les faces intérieures de leurs parois et leurs fonds soient tournés vers le haut.

Les moyens de projection 4 comprennent un pistolet 14 monté mobile en rotation autour de son axe vertical 15 sous l'action d'un vérin pneumatique 16 à double effet horizontal comprenant un corps 17 monté fixe et une tige mobile 18 à l'extrémité libre de laquelle est montée une crémaillère 19, s'engrénant avec un pignon 20 cylindrique coaxial au pistolet 14 et solidaire d'un tube d'amenée 21 de chocolat reliant la partie supérieure du pistolet 14 à un raccord tournant 22, lui-même relié à un conduit d'amenée 23 du circuit d'alimentation 5. Le pistolet 14 est solidaire en rotation par sa partie inférieure d'un embout tubulaire coudé 24, muni à son extrémité libre d'une buse 25 apte à projeter un jet de chocolat en fusion à l'intérieur d'un contenant placé, par l'intermédiaire de la bande transporteuse 2 se déplaçant pas à pas de façon discontinue, directement au-dessous de la buse calibrée 25 dans l'axe vertical 15 du pistolet 14. Le conduit d'amenée 23 du circuit d'alimentation 5 est équipé d'une électrovanne 26 et est relié à une pompe à surpression 27 aspirant le chocolat en fusion contenu dans une cuve de mise en fusion (non représentée sur le dessin) par l'intermédiaire d'un conduit 28.

Il est à noter que les conduits d'amenée ou de sortie de chocolat circulant à l'extérieur de l'enceinte 1 thermorégulée sont équipés de résistances électriques permettant de chauffer leurs parois, évitant ainsi le durcissement du chocolat.

Lorsque les coupelles 3 parviennent en bout de la bande transporteuse 2, elles basculent en position renversée sur un tapis vibrant ajouré 29, constitué par un treillage à mailles se déplaçant dans le sens de la flèche F jusqu'à la sortie 11, autour de deux cylindres rotatifs dont l'un est entraîné par un moteur non représenté. Ce tapis 29 vibre sous l'effet d'un rotor à lames 30, de forme parallélépipédique, entraîné en rotation autour de son axe horizontal, et disposé au-dessous du brin supérieur du treillage à mailles 29 supportant les coupelles 3 de manière à le soulever par intermittence, le mettant ainsi en vibration. Le treillage à mailles 29 et le rotor constituent les moyens d'agitation 7 des contenants 3.

Directement au-dessous de ce tapis vibrant 29, sont disposés les moyens de récupération 8 du surplus de chocolat, formés par une cuve 31, conçue comme une trémie à double parois 32 définissant un volume rempli d'un liquide chaud, par exemple de l'eau, évitant le durcissement du chocolat récupéré. Le fond de cette cuve 31 est relié au circuit d'alimentation 5, par l'intermédiaire d'un conduit de sortie 71, équipé d'une électrovanne 33.

Le vérin horizontal 16, les électrovannes 26,33 et le moteur 70 définissant l'avance pas à pas de la bande transporteuse sont sous le contrôle d'un système de commande électronique, non représenté sur le dessin.

Le fonctionnement du dispositif décrit précédemment est le suivant :

Les coupelles 3 sont acheminées par un tapis roulant jusqu'au passage d'entrée 10 de l'enceinte 1. Elles sont ensuite prises en charge par la bande transporteuse 2 qui les reçoit dans ses alvéoles 13 de telle manière que les faces intérieures de leurs parois et leurs fonds soient tournées vers le haut. La bande transporteuse 2 qui se déplace pas à pas de façon discontinue convoie les coupelles 3 vers les moyens de projection 4. Chacune d'entre elles est arrêtée directement au-dessous de la buse 25 dans l'axe vertical 15 du pistolet 14, pendant une durée d qui est comprise entre une et trois secondes selon la cadence souhaitée.

Ensuite, le système de commande électronique provoque simultanément l'ouverture de l'électrovanne 26 et la mise en action du vérin pneumatique 16 horizontal. Ceci entraîne la rotation de la buse 25 sur 360° et la projection d'un jet de chocolat en fusion sur les faces intérieures de la coupelle. La conformation de l'embout coudé 24 et la position de la buse 25 sont telles que le jet de chocolat est projeté dans la région supérieure des faces intérieures ; le chocolat liquide, en s'écoulant, tapisse ainsi, par enduction grasse l'intérieur du contenant 3 considéré. Le chocolat en fusion arrive dans la buse 25 sous une pression comprise entre 50 et 60 bars, déterminée par la pompe à surpression 27.

Dès que la rotation de la buse 25 est terminée, l'électrovanne 26 coupe l'amenée de chocolat liquide et la bande transporteuse 2 amène en position une autre coupelle 3.

Après l'opération de chemisage, les coupelles 3 parviennent en bout de bande transporteuse 2 et basculent ensuite en position renversée sur le tapis vibrant ajouré 29. Le chocolat en surplus se déverse alors dans la cuve 31, en s'écoulant au travers des mailles du treillage 29 et ceci d'autant mieux que le rotor à came 30 fait vibrer le brin supérieur du treillage 29. Le durcissement du chocolat recueilli dans la cuve 31 est évité du fait des parois chauffantes 32 de celle-ci. Le chocolat liquide en surplus peut ainsi être réinjecté dans le circuit d'alimentation 5 au moyen de la pompe à surpression 27 lorsque l'électrovanne 33 du conduit de sortie 32 s'ouvre.

Comme le montre la figure 1, les coupelles 3 égouttées parviennent au passage de sortie 11 de l'enceinte 1 et sont ensuite transportées par un tapis roulant vers une aire de refroidissement.

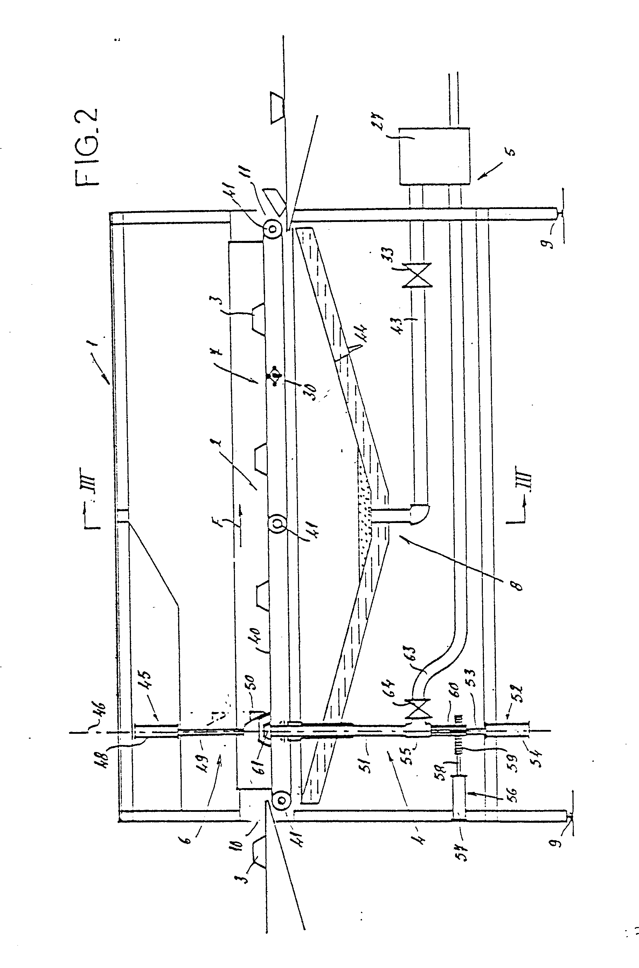

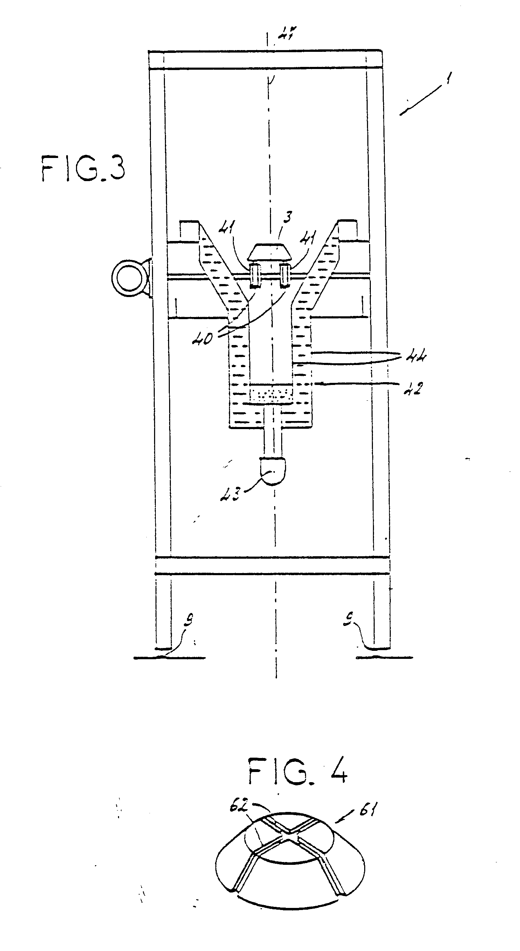

Une deuxième forme de réalisation du dispositif conforme à l'invention, est représentée schématiquement par les figures 2 et 3.

A l'intérieur de l'enceinte 1 thermorégulée par ventilation, les coupelles 3 sont prises en charge par la chaîne de transport 2, constituée par deux fils transporteurs 40 sans fin, continus, parallèles entre eux et situés au même niveau. Chacun de ces fils transporteurs 40, réalisé en tout matériau approprié, notamment en matériau synthétique, est monté déplaçable autour de trois poulies 41 d'axes horizontaux, deux d'entre elles étant disposées respectivement à l'entrée 10 et à la sortie 11 de l'enceinte 1, et la troisième étant une poulie intermédiaire disposée au milieu de l'enceinte 1 et délimitant celle-ci en deux parties.

Les poulies 41 motrices sont, dans cet exemple celles disposées à la sortie 11 et elles entraînent les fils transporteurs 40 en déplacement dans le sens de la flèche F.

Les coupelles 3 sont disposées sur les fils transporteurs 40 de telle manière que les faces intérieures de leurs parois et leurs fonds soient tournées vers le bas. Les moyens de récupération 8 sont constitués par une cuve 42 conçue comme une trémie et présentant une forme en "V" en vue de face. Elle est disposée sur toute la longueur de l'enceinte 1 et directement au-dessous des deux fils transporteurs 40. Son fond communique avec un conduit de sortie 43 le reliant au circuit d'alimentation sous pression 5 et elle comporte des double-parois 44 chauffantes remplies d'eau chaude.

Situées dans une première partie de l'enceinte 1 directement après l'entrée 10, les moyens de positionnement 6 comprennent un vérin 45 à double effet d'axe vertical 46 compris dans le plan médian longitudinal 47 des deux fils transporteurs 40. Ce vérin 45 comporte un corps fixe 48 et une tige 49 mobile entre une position basse (figure 2) et une position haute illustrée en traits mixtes sur la figure 2. L'extrémité inférieure de cette tige 49 est munie d'une pièce de retenue 50.

Les moyens de projection 4 sont constitués par un tube de projection 51, coaxial au vérin de positionnement 45. Ce tube de projection 51 s'étend au travers de la cuve 42 et est mobile en translation entre une position haute de projection (figure 2) et une position basse illustrée en traits mixtes sur la figure 2, sous l'action d'un vérin pneumatique vertical 52 de levage à double-effet dans la direction de l'axe 46. Ce vérin vertical 52 comporte une tige 53 mobile par rapport à un corps fixe 54 et liée à l'extrémité inférieure du tube de projection 51 par l'intermédiaire d'un raccord tournant 55 connu en soi.

En outre, le tube de projection 51 est également mobile en rotation autour de son axe vertical 46 sous l'action d'un vérin pneumatique horizontal 56 à double effet comportant un corps fixe 57 et une tige mobile 58 dont l'extrémité extérieure est prolongée par une crémaillère 59 s'engrenant sur un pignon 60 coaxial au tube de projection 51 dont il est solidaire par l'intermédiaire du raccord tournant 55.

L'extrémité supérieure du tube de projection 51 est équipée d'une buse 61. Ainsi que le montre la figure 4, cette buse 61 présente une forme générale tronconique adaptée à la forme particulière du contenant 3 choisi dans cet exemple. Elle comporte par ailleurs des fentes en croix 62, permettant une projection optimale dans l'espace intérieur de la coupelle 3.

Le raccord tournant 55 est relié à un conduit flexible 63 d'amenée de chocolat en fusion appartenant au circuit d'alimentation sous pression 5 et étant équipé d'une électrovanne 64.

Les moyens d'agitation 7 disposés, dans la deuxième partie de l'enceinte 1, sont constitués comme précédemment décrits par un rotor à cames 30, faisant vibrer les fils transporteurs 40 de façon à permettre l'égouttage du surplus de chocolat liquide présent à l'intérieur des coupelles 3.

Tout comme dans la première forme de réalisation, les conduits d'amenée ou de sortie de chocolat circulant à l'extérieur de l'enceinte thermorégulée sont équipés de résistances électriques permettant de chauffer leurs parois, évitant ainsi le durcissement du chocolat.

Le fonctionnement des électrovannes 33,64 et des vérins 45,52,56 est bien entendu géré par un système de commande électronique non représenté sur le dessin.

Le dispositif décrit précédemment fonctionne comme suit :

Les coupelles 3 sont acheminées par un tapis roulant jusqu'au passage d'entrée 10 et de l'enceinte 1. Elles passent ensuite sur les deux fils transporteurs 40 dans une position telle que les faces intérieures de leurs parois et leurs fonds soient tournées vers le bas. Les fils 40 transportent les coupelles 3 de façon continue.

Sur l'ordre du système de commande électronique, le vérin 45 de positionnement provoque le passage en position basse de sa tige 49, de telle sorte que la pièce de retenue 50 arrête une coupelle 3 par rapport aux fils 40 mobiles. Le vérin de levage 52 est alors mis en action et déplace le tube de projection 51 de sa position basse jusqu'à sa position haute. Ce dernier s'engage entre les deux fils 40 de manière à ce que la buse 61 se trouve disposée à l'intérieur de la coupelle 3. Le vérin horizontal 56 est ensuite actionné et entraîne en rotation le tube de projection 51 et la buse 61 sur un angle de l'ordre de 100°. Simultanément, l'électrovanne 64 disposée sur le conduit flexible d'amenée 63 s'ouvre et le chocolat liquide en fusion est projeté à l'intérieur de la coupelle 3, sous une pression comprise entre 50 et 60 bars. La partie du chocolat liquide qui n'adhère pas dans la coupelle 3 tombe dans la cuve 42.

Au terme de la rotation de la buse 61, l'électrovanne 64 coupe l'arrivée de chocolat et les vérins 45,52 ramènent respectivement la tige 49 en position haute et le tube de projection 51 en position basse.

Les coupelles 3 chemisées parviennent ensuite dans la deuxième partie de l'enceinte 1 où elles sont mises en agitation sous l'effet des fils transporteurs 40 qui vibrent grâce au rotor à cames 30. Les coupelles 3 sont ainsi égouttées et le surplus de chocolat liquide est récupéré dans la cuve 42.

Il n'est pas nécessaire de revenir sur la récupération et sur la réutilisation du chocolat liquide qui ont été largement décrites précédemment, de même que sur l'acheminement des coupelles vers une aire de refroidissement.

Les dispositifs selon l'invention permettent ainsi de chemiser l'intérieur de contenants consommables par une pâte de confiserie à des cadences industrielles rapides qui peuvent atteindre dans ces exemples non limitatifs des valeurs de l'ordre de 15 à 40 coupelles par minute.

Les contenants peuvent être de forme quelconque. Il peut s'agir notamment de cornets à glaces coniques du type roulé dont l'intérieur est chemisé par du chocolat au moyen de l'un des dispositifs suivant l'invention. Il est alors possible d'introduire, avant solidification du chocolat, dans un cornet roulé chemisé de la sorte, un autre cornet par exemple du type moulé, aux dimensions appropriées de telle sorte que le chocolat une fois solidifié joue le rôle d'agent de liage et fixe l'un à l'autre les deux cornets.

Par ailleurs, dans les dispositifs décrits ci-dessus, la projection de chocolat s'effectue par le haut ou par le bas, mais elle peut également s'effectuer dans toutes les positions intermédiaires notamment en position horizontale.

Enfin, il est possible d'employer comme produit de chemisage toutes les pâtes de confiserie appropriées outre le chocolat, comme par exemple la confiture.

**Revendications**

1 - Procédé industriel de chemisage par une pâte de confiserie, telle que du chocolat, de l'intérieur de contenants (3) consommables en forme de coupes, cornets ou similaires, selon lequel on amène chaque contenant consommable (3) dans une position telle que les faces intérieures de ses parois et son fond sont en regard de moyens de projection (4) de la pâte de confiserie, et on maintient le contenant (3) dans cette position pendant une durée (d) au cours de laquelle les moyens de projection (4) envoient à l'intérieur du contenant consommable (3) la pâte de confiserie préalablement portée en fusion, caractérisé en ce que l'on fait tourner lesdits moyens de projection pendant ladite durée de projection (d).

2 - Procédé selon la revendication 1, caractérisé en ce que l'on projette en excédent la pâte de confiserie à l'intérieur desdits contenants consommables et en ce qu'on élimine et on récupère le surplus de pâte de confiserie non utilisé au chemisage de ceux-ci.

3 - Dispositif pour la mise en oeuvre du procédé selon l'une des revendications 1 ou 2, caractérisé en ce qu'il comprend une enceinte (1) régulée thermiquement à une température au moins égale à la température de fusion de la pâte de confiserie, et présentant une entrée (10) et une sortie (11), à l'intérieur de laquelle sont disposés une chaîne de transport (2) supportant et convoyant les contenants (3), des moyens rotatifs pour la projection (4) de la pâte de confiserie en fusion à l'intérieur des contenants (3), ces moyens rotatifs de projection (4) étant reliés à un circuit d'alimentation (5) sous pression à la pâte de confiserie en fusion, et des moyens de positionnement (6) des contenants (3) permettant de placer successivement, pendant la durée de projection d, les faces intérieures des parois et le fond de chacun d'eux en regard des moyens de projection (4).

4 - Dispositif selon la revendication 3, caractérisé en ce que les moyens de projection (4) sont constitués par au moins un pistolet (14) mobile en rotation autour de son axe (15), sous l'effet d'un organe d'actionnement (16), le pistolet (14) étant solidaire en rotation, à l'une de ses extrémités, d'un tube d'amenée (21) de pâte de confiserie, lui-même relié, par l'intermédiaire d'un raccord tournant (22) étanche, au circuit d'alimentation (5) sous pression, et, à son autre extrémité, d'un embout tubulaire (24) coudé à l'extrémité libre duquel est montée une buse (25) apte à projeter un jet de pâte de confiserie en fusion à l'intérieur d'un contenant (3) de telle sorte qu'à chaque pas d'entraînement de la bande transporteuse (2) sans fin chargée de contenants (3), l'un d'eux se trouve placé pendant une durée d directement en regard de la buse (25) dans l'axe (15) du pistolet (14) et que simultanément, d'une part, une électrovanne (26) disposée sur le circuit d'alimentation (5) s'ouvre autorisant ainsi la venue de la pâte de confiserie jusqu'à la buse (25) et, d'autre part, l'organe d'actionnement (16) soit mis en marche et provoque la rotation du pistolet (14) autour de son axe (15), donc de la buse (25), qui projette la pâte de confiserie sur la périphérie des parois intérieures du contenant (3), la fin de la rotation coïncidant avec la fermeture de l'électrovanne (26).

5 - Dispositif selon la revendication 4,
caractérisé en ce que l'organe d'actionnement (16) est constitué par un vérin pneumatique (16) à double effet dont la tige mobile (18) par rapport au corps fixe (17) est reliée par son extrémité à une crémaillère (19) s'engrenant sur un pignon cylindrique (20), coaxial au pistolet (14) et solidaire du tube d'amenée (21) de pâte de confiserie.

6 - Dispositif selon la revendication 4 ou la revendication 5,
caractérisé en ce que l'angle de rotation du pistolet (14) est d'au moins 360°.

7 - Dispositif selon la revendication 3,
caractérisé en ce que les moyens de projection (4) sont constitués par au moins un tube de projection (51), coaxial au vérin de positionnement (45), mobile en rotation autour de son axe (44) et en translation entre une position rapprochée de projection et une position éloignée sous l'effet de moyens de manoeuvre (52,56), l'extrémité libre de ce tube (51) étant équipée d'une buse (61) et son autre extrémité étant reliée à un raccord tournant (55) lui-même, relié d'une part, à un conduit d'amenée (63) de pâte de confiserie en fusion du circuit d'alimentation (5) sous pression, et d'autre part aux moyens de manoeuvre (52,56).

8 - Dispositif selon la revendication 7,
caractérisé en ce que les moyens de manoeuvre sont constitués par un premier vérin (52) à double effet dont la tige mobile (53) par rapport au corps fixe (54) est liée au tube de projection (51) par l'intermédiaire du raccord tournant (55), et par un second vérin (56) à double effet comportant un corps fixe (57) et une tige mobile (58) dont l'extrémité extérieure est prolongée par une crémaillère (59) s'engrenant sur un pignon coaxial (60) au tube de projection (51) dont il est solidaire par l'intermédiaire du raccord tournant (55), ces deux vérins (52,56) fonctionnant de telle sorte qu'après arrêt d'un contenant (3) par les moyens de positionnement, dans un premier temps, le premier vérin (52) soit mis en action et provoque le déplacement du tube de projection (51) de sa position éloignée jusqu'à sa position rapprochée dans laquelle la buse (61) est disposée à l'intérieur du contenant, et dans un deuxième temps le second vérin (56) entraîne en rotation le tube de projection (51) et la buse (61) et, simultanément une électrovanne (64), disposée sur le circuit d'alimentation (5), s'ouvre, permettant ainsi la projection d'un voile de pâte de confiserie en fusion sur les parois intérieures et sur le fond du contenant (3), la fermeture de l'électrovanne (64) et le retour en position basse du tube de projection (51) intervenant avant le terme de la durée d.

9 - Dispositif selon l'une des revendications 7 ou 8,
caractérisé en ce que la buse (61) est de forme tronconique et présente des fentes en croix (62).

10 - Dispositif selon l'une quelconque des revendications 3 à 5,
caractérisé en ce que la chaîne de transport (2) est constituée par une bande transporteuse (2) sans fin, convoyant les contenants (3) de l'entrée (10) de l'enceinte (1) vers l'intérieur, munie d'alvéoles (13) prévus pour recevoir les contenants (3), dans lesquels ils sont disposés de telle manière que les faces intérieures de leurs parois et leurs fonds soient tournés vers le haut, cette bande transporteuse (2) étant animée de façon discontinue par un moteur (70) constituant les moyens de positionnement (6), et en ce qu'on prévoit des moyens d'agitation (7) des contenants (3) comprenant un tapis vibrant (27) ajouré tel qu'un treillage à mailles se déplaçant autour de deux cylindres rotatifs dont l'un est entraîné par un moteur, l'une des extrémités de ce tapis vibrant (27) étant disposée au-dessous et à l'aplomb de l'extrémité intérieur de la bande transporteuse (2), de telle manière que, lorsque les contenants (3) dans lesquels la pâte de confiserie a été projetée arrivent en bout de bande transporteuse (2), ils basculent en position renversée sur le tapis vibrant (27) sur lequel ils sont transportés, tout en étant agités, jusqu'à la sortie de l'enceinte (1), des moyens de récupération (8) du surplus de pâte de confiserie étant constitués par une cuve (31) à parois (32) chauffantes conçue comme une trémie et disposée directement au-dessous du tapis vibrant (27), le fond de cette cuve (31) étant relié au circuit d'alimentation (5) sous pression par l'intermédiaire d'un conduit de sortie (71) sur lequel est prévue une électrovanne (33).

11 - Dispositif selon la revendication 10,
caractérisé en ce qu'il est prévu sous le brin supérieur du tapis vibrant (27) un rotor parallélépipédique (31) à cames entraîné en rotation par un moteur autour de son axe et disposé de telle façon qu'il soulève par intermittence le brin supérieur du tapis vibrant (27), mettant ainsi ce dernier en vibration.

12 - Dispositif selon l'une quelconque des revendications 3 à 9,
caractérisé en ce que la chaîne de transport (2) est constituée par au moins deux fils transporteurs (40) sans fin continus, parallèles entre eux et situés au même niveau, dont chacun est monté, déplaçable autour d'au moins deux poulies (41) disposées respectivement à l'entrée (10) et à la sortie (11) de l'enceinte (1), l'une au moins de ces deux poulies (41) étant motrice, les contenants (3) étant disposés sur ces deux fils transporteurs (40) de telle manière que les faces intérieures de leurs parois et leurs fonds soient tournées vers le bas, afin de coopérer avec les moyens de projection (4) disposés au-dessous et prévus pour s'engager entre les deux fils transporteurs (40).

13 - Dispositif selon la revendication 12, caractérisé en ce qu'il comporte des moyens de récupération (8) sont constitués par une cuve (42) à parois chauffantes (44), conçue comme une trémie, présentant une forme en "V" en vue de face, et disposée directement au-dessous des fils transporteurs (40), le fond de cette cuve (42) communiquant avec un conduit de sortie (43) la reliant au circuit d'alimentation (5) sous pression.

14 - Dispositif selon la revendication 12 ou la revendication 13,
caractérisé en ce que dans une première partie de l'enceinte (1) située directement après l'entrée (10), il est prévu des moyens de positionnement des contenants (3) qui comprennent au moins un vérin (45) à double effet d'axe vertical (46) compris dans le plan médian longitudinal (47) des deux fils transporteurs (40) comportant un corps fixe (48) et une tige mobile (49) entre une position basse et une position haute, à l'extrémité inférieure de laquelle est montée une pièce de retenue (50) apte à arrêter pendant une durée d chaque contenant (3) par rapport aux fils transporteurs (40) mobiles, en position basse de la tige.

15 - Dispositif selon l'une quelconque des revendications 12 à 14,
caractérisé en ce que des moyens d'agitation (7), disposés dans la deuxième partie de l'enceinte (1), sont constitués par un rotor parallélépipédique (30) à cames entraîné en rotation par un moteur autour d'un axe horizontal et disposé de telle façon qu'il soulève par intermittence les brins supérieurs des fils transporteurs (40), mettant ainsi ces derniers en vibration, ce qui provoque l'agitation et l'égouttage des contenants (3) chemisés au cours de leur déplacement jusqu'à la sortie (11) de l'enceinte (1).

16 - Contenant chemisé obtenu par le procédé selon la revendication 1 ou la revendication 2,
caractérisé en ce qu'il est constitué par un cornet conique en pâte à biscuit dans lequel est introduit un autre cornet aux dimensions adaptées, avant solidification de la pâte de confiserie, de telle sorte que cette dernière joue le rôle d'agent de liage, solidarisant l'un à l'autre les deux cornets.

FIG.1

EP 0 350 352 A1

FIG.2

EP 0 350 352 A1

FIG.3

FIG. 4

Office européen
des brevets

# RAPPORT DE RECHERCHE EUROPEENNE

Numero de la demande

EP 89 40 1689

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | EP-A-0 045 522 (I. RUBENSTEIN et al.) <br> * Page 18, lignes 16-25; figures 1,3 * <br> --- | 1-4,6, 10,16 | A 23 G 9/28 <br> A 21 C 15/00 <br> A 23 G 1/00 <br> A 23 G 3/20 <br> A 23 G 3/22 |
| Y | US-A-3 572 256 (S.B. WESTIN) <br> * Figure 1; revendication 1; colonne 2, lignes 9-65 * <br> --- | 1-4,6, 10,16 | |
| A | US-A-1 711 750 (W.C. SCHOPPNER) <br> * Figures 5,4,2,1; page 3, lignes 41-58 * <br> --- | 4-6 | |
| A | BE-A- 707 770 (GEBR. STEINHOFF) <br> --- | | |
| A | US-A-2 670 696 (C.J. COVERT et al.) <br> --- | | |
| A | US-A-1 499 149 (M.E. BUHSE) <br> --- | | |
| A | EP-A-0 078 342 (O. YOSHIO) <br> ----- | | |

DOMAINES TECHNIQUES RECHERCHES (Int. Cl.4)

A 23 G

Le présent rapport a été établi pour toutes les revendications

| Lieu de la recherche | Date d'achèvement de la recherche | Examinateur |
|---|---|---|
| LA HAYE | 21-07-1989 | GUYON R.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P0402)